# EUROPEAN PATENT APPLICATION

(11) **EP 4 075 065 A1**
(43) Date of publication of application: **19.10.2022**
(21) Application number: 21168135.8
(22) Date of filing: 13.04.2021
(51) Int. Cl.: F23R 3/28, F02C 3/30, F02C 9/28, F23D 14/82, F23L 7/00, F23R 3/34, F23R 3/36

(54) **METHOD FOR OPERATION OF A GAS TURBINE**

(71) Applicant: Siemens Energy Global GmbH & Co. KG, 81739 München (DE)
(72) Inventor: Andersson, Mats, 60234 Norrköping (SE); Ekman, Mats, 61236 Finspång (SE)

(57) **Abstract**

The invention is about a method to operate a combustion device of a gas turbine. Therefore, combustion air (6) and fuel (4) are supplied into a mixing volume (18) of a burner (2) and then burned inside a combustion chamber (16). A flashback detection device monitors continuously the combustion device in order to detect a potential flashback state. Further, a water supply arrangement with a storage vessel connected to the burner is necessary. In case of a flashback state water is injected into the mixing volume for at least 3 sec and at most 30 sec to reduce the combustion temperature, therefore the storage vessel is filled at least 15% and at most 95% with water and the remaining part with gas having a pressure of at least 10 bar.

## Description

The invention relates to the operation of a gas turbine in particular to prevent a flashback into the burner of the gas turbine by the usage of a water injection.

Controlling the fuel distribution and the temperature of the primary combustion zone is of key importance in order to achieve low emissions and reaching good combustion stability with low levels of combustor pressure oscillations. The flame temperature can be influenced by controlling the amount of airflow into the burners. An increase in temperature can be achieved by adjusting the mass flow of air either by turning suitable variable compressor guide vanes, using a combustor bypass for air, or through bleeding compressor air, the latter one being negative for gas turbine efficiency.

Combustion in gas turbines when using reactive fuels can result in flashback, i.e. the high burning velocity of the fuel moves the flame upstream. This results in down-time of the gas turbine and loss of production. The reason for an unexpected flashback can be a change in fuel composition or another, not foreseen change in the operation conditions.

When a flashback is detected, the typical approach to counteract this phenomenon is to stop the fuel flow and consequently trip the engine and thereby interrupt all benefits from running the gas turbine.

It is an objective of the present invention to provide a method of operation of a gas turbine during flashback in which the performance of the turbine is better used than in the current practice.

The objective of the invention is achieved by the claim 1. The dependent claims describe advantageous developments and modifications of the invention.

In accordance with the present invention there is provided a method for operation of a combustion device. The solution is advantageously used for a combustion device of a gas turbine.

In case of a gas turbine this comprises a compressor section at the upstream side, a combustion device and an expansion turbine section downstream of the combustion device.

The combustion device comprises at least one burner, which in turn has a mixing volume. Fuel and combustion air could be supplied to the burner into the mixing volume, where the fuel and combustion air is mixed prior to the combustion.

The combustion device comprises further a combustion chamber, wherein the at least one burner is attached upstream of the combustion chamber so that the mixed fuel and combustion air could flow out of the burner into the combustion chamber to be burned.

It is further essential for the operation method that a flashback detection device is available. This monitors the combustion device whether a flashback state is given. The flashback state is given if already the flame of the combustion process entered the mixing volume of the burner or that it must be expected that the flame will enter the mixing volume if no further measures are taken.

Therefore, advantageously the flashback detection device comprises at least one sensor. With the at least one sensor continuously the state of the at least one burner and/or the combustion chamber and/or the combustion process during operation the combustion device is monitored in order to detect a flashback of a flame from the combustion chamber into the burner, in particular into the mixing volume of the burner. To enable the desired action against the flashback or to prevent a flashback in the event that a flashback is about to occur it is further necessary to provide a water supply arrangement. Here, the water supply arrangement comprises at least one storage vessel and is connected to the burner.

At common operation methods in case of a flashback the fuel is reduced immediately by a significant amount or even more the combustion process is stopped. Especially with the combustion of high reactive fuels this was the only possible solution to avoid damage at the combustion device.

The key feature of the new operation method is the injection of water into the mixing volume of the burner in case of a flashback state with the primary target to reduce the combustion temperature. The period for the injection of water needs to be at least 3 seconds to enable an effect of the injection of water. On the other hand, the injection of water should not exceed 30 seconds.

To enable an exceptionally fast response in case of a flashback state to avoid a shutdown it is necessary that water with a sufficient pressure is available from the storage vessel at any time. Therefore, the storage vessel is filled with water and with gas wherein the pressure inside the storage vessel is at least 10 bar at any time during the operation of the combustion device. In this case the storage vessel should be filed at any time during operation with water within a range between at least 15% and at most 95% wherein the remaining part is gas.

With the additional storage vessel with an always available high-pressure water a shutdown of the combustion device could be avoided in case a flashback state occurs when burning a high reactive fuel.

The present invention is based on the detection of an actual flashback state via the at least one sensor and changing the operating conditions. The target is to avoid burner damages, while the gas turbine is still being operated.

The method is applied preferably when the gas turbine is operated with full load or with load close to full load, because this is also the point of time when flashbacks are likely to appear.

When a flashback state is detected, a signal is immediately given to inject water into the mixing volume to reduce the temperature of the combustion and act against the flashback. Hence, the gas turbine will be operated the whole time, in contrast to the standard trip procedure used at present.

The burner could be of a different type. Here, it is advantageous to use a burner comprising at least two separate stages with a pilot burner having a pilot flame and a main burner having a main flame. Here, the mixing volume belongs to the main burner creating the main flame, which is primary affected by a potential flashback.

The inventive method could be used in principle while burning any kind of fuel. But it is advantageous if the fuel comprises at least 25% a high reactive fuel. It is particularly advantageous if the fuel comprises at least 40% a high reactive fuel. Further, the usage of the inventive method is in particular advantageous if hydrogen is burned.

To enlarge the lifetime of the storage vessel and the piping and primary to avoid any impact if the gas from the storage vessel is partly injected with the water into the mixing volume, i.e. a possible impact on the desired reduction of the combustion temperature, the gas in the storage vessel is advantageously an inert gas. Here, it is in particular advantageous if the storage vessel is filled with water and nitrogen.

To guarantee the injection of water into the mixing volume in case of a flashback state advantageously the pressure within the storage vessel is kept at least 1,5 bar above the pressure within the combustion chamber wherein the pressure drop from the storage vessel to the burner needs to be added (pressure inside storage vessel = pressure inside combustion chamber + pressure drop). Here, the pressure inside the combustion chamber could be calculated in advance by the knowledge about the characteristics of the combustion device. It is also possible to determine the pressure by the use of a pressure sensor. To achieve a fast injection the pressure should be in particular advantageously at least 2,5 bar above the pressure within the combustion chamber including the pressure drop from the storage vessel to the mixing volume.

But the pressure inside the storage vessel does not need to exceed a value of 6 bar above the pressure within the combustion chamber (again with the pressure drop added).

An optimized use of the inventive method could be advantageously achieved if the water is injected in case of a flashback state for a period of at least 8 seconds. It has been found that the sufficient effect by the injection of water could be advantageously achieved if the period for the injection of water is at most 12 seconds.

It could happen, that the desired effect with pushing the flame from the mixing volume back into the combustion chamber has not been reached by the first injection of water. In this case advantageously the injection of water is repeated. This is preferably done up to 10 times. Advantageously a predetermined number of repeated injections of water is limited up to 5 times - always in case the flashback state is still given after a previous injection of water.

To determine the flashback state after an injection of water advantageously a reaction time is set before a further injection of water is considered. Here, the reaction time should not less than 1 second. Preferably the reaction time is at least 2 seconds. To avoid a damage of the burner because the flashback state is still given after an injection of water the reaction time should preferably not exceed 5 seconds. It is in particular advantageous if the reaction time does not exceed 3 seconds.

If the method enables a number of subsequent injections of water the definition of the storage vessel with the amount of water and gas takes into account that after the predetermined number of water injections, e.g. 5 times, the pressure within the storage vessel should advantageously be at least 1,5 bar above the pressure within the combustion chamber adding the pressure drop from the storage vessel to the mixing volume.

It could happen, that the flashback state could not be solved by the repeated injections of water. In this case advantageously the fuel supply is stopped if after a predetermined (maximum) number of injections of water the flashback state is still given.

The inventive method leads to a reduction of the temperature within the combustion chamber and/or the burner by the injection of water. The effect is advantageously improved if the mass flow of the water injected into the mixing volume is at least 0,1-time the mass flow of the fuel. It is further advantage if the mass flow of the water injected into the mixing volume in case of a flashback state is at least 0,2 times the mass flow of the fuel to the burner.

To keep the combustion process proceeding and to prevent an extinction of the flame inside the combustion chamber the mass flow of the water should preferably not exceed 0,8-times the mass flow of the fuel. To preserve the power output of the combustion device best as possible the mass flow of the water should advantageously at most 0,5-times the mass flow of the fuel.

Next it is advantageous to use a flow of water of at least 0,02 litres per second and in particular at least 0,04 litres per second to the burner with the flashback state. On the other side the flow of water it preferably at most 0,1 litre per second to the respective burner. Here, it is further advantageous to limit the flow to at most 0,07 litre per second.

The inventive method to operate a combustion device could be used at different kind of combustion devices. With an advantageous usage at a combustion device of a gas turbine a number of burners are commonly used. Different arrangements of the burners are possible.

In a first advantageous embodiment the combustion device comprises a number of burners arranged in circumference around a central axis of the gas turbine wherein one annular combustion chamber is used.

In a second advantageous embodiment the combustion device comprises also a number of burners arranged in circumference around a central axis of the gas turbine but against previous solution each burner is attached at the upstream end of its own separate combustion chamber.

In a third embodiment the combustion device comprises one combustion chamber and a number of burners arranged jointly at the upstream end of the combustion chamber. Here, the combustion device could represent a so-called silo-combustion of a gas turbine.

Independent of the embodiment in case of a number of burners an advantageous flashback detection device monitors continuously each of the burner in order to detect if a flashback state occurs at any of the burners. This enables the initiation of the response with an injection of water into mixing volume of the respective burner.

In case of the first embodiment with an annular combustion chamber in case of a flashback state at an assignable burner advantageously water is not only injected into the respective burner but also into at least two adjacent burners. This will result into a reduction of the combustion temperature at the respective burner and also at the adjacent burners and within the common combustion chamber in the area of the affected burner with the flashback state.

In case of the first embodiment and even more in case of the third embodiment, it could be further advantageous to inject water into the mixing volume of each of the burners to prevent a circulation of the flashback between different burners. Also, this solution could simplify the implementation of the inventive method.

To prevent that the cause for the flashback state leads after the injection of water to a new following flashback state it could be useful to reduce the flow of fuel to at least the burner with the flashback state by at least 5%.

To keep power output of the combustion device at a preferably high level the fuel flow should not drop below 50% of the fuel flow before the flashback state occurred.

In case the burner comprises at least two separate stages like a main stage with the mixing volume and a pilot stage as an alternative solution or also as an additional solution advantageously it is possible to redirect the fuel flow from the main stage to the pilot stage. Therefore, the fuel flow to the main stage is reduced by at least 5% - but not more than 50% - wherein the fuel flow to the pilot stage is increased by the same (or a less) amount.

As it could be possible, that the danger of a flashback has been identified quickly enough that one injection of water is sufficient to continue with normal operation a reduction of the fuel flow is preferably avoided at the first injection of water or only a short portion of the fuel flow to the burner is reduced and/or redirected from the main stage to the pilot stage, e.g. by about 5% or less of the regular fuel flow.

If the flashback state is still given after an injection of water preferably at least with the second injection of water the flow of fuel is reduced and/or redirected. The injection of water combined with a reduction/redirection of the fuel flow could advantageously repeated up to the predetermined maximum number of repetitions.

In case that two different fuels are burned, independent if these are mixed together before getting burned or burned through the usage of separated stages of the burner, it is advantageous to reduce the fuel flow of those fuel with the high reactive fuel.

To determine a flashback state different solution are possible. Therefore, the flashback detection device preferably comprises sensors which are able to measure the gas temperature, in particular the sensors are designed as thermocouples. Thermocouples are relatively inexpensive and easily understood. Alternatively, laser or pressure measurement devices are used as sensors in order to detect flashback in the combustion device. These measurement devices work faster than thermocouples, so that a flashback can be detected without a significant delay.

In order to detect very quickly if a flame has moved inside the burner, in a preferred embodiment the sensors are used to measure the gas temperature downstream of the combustion device, e.g. to measure the gas temperature of the exhaust gases at the end of the turbine part.

In an alternative preferred embodiment, the sensors are used to measure the gas and/or material temperature inside the burner.

The burner comprises a mixing volume for mixing the fuel and air for the main flame. Therefore, advantageously the sensors for detecting flashback are arranged within the burners, in particular the sensors are positioned at the mixing volume.

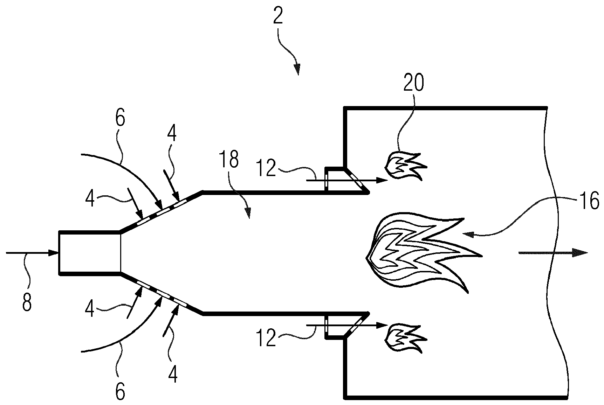

An embodiment of the invention is now described, by way of example only, with reference to the accompanying drawings, of which the only figure shows a burner 2. The burner 2 could be one of many burners of a combustion device of a gas turbine which is not shown in detail in the figure. The combustion device of the gas turbine comprises e.g. an annular combustion chamber with 18 burners.

A number of sensors is installed in the gas turbine to monitor the combustion, wherein the temperature sensors are mounted at different circumferential positions and each sensor output signal being assigned to monitor at least one of the burners. In the present embodiment thermocouples are used as sensors. A control unit of the gas turbine receives the sensor output signals. A method for monitor the combustion process in a gas turbine by using temperature sensors to measure the exhaust gas temperature is described for example in EP 3 660 293 A1.

The burner 2 consists of a split cone forming four air slots where the combustion air 6 and main fuel 4 is injected. Near the tip of the cone, through an opening 8, the central fuel is fed and mixed with the air flow 6. The burner 2 comprises the mixing volume 18 for mixing the fuel 4, 8 and air 6 for the main flame 16. The pilot fuel injection 12 for the pilot flames 20 is positioned at the burner rim, where less pre-mixing of fuel and air is occurring.

Controlling the fuel distribution and the temperature of the primary combustion zone is of key importance in order to avoid combustion instability characterized by large-amplitude pressure pulsations driven by unsteady heat release. The stability of the combustion process is monitored during operation of the gas turbine by means of the thermocouples and pressure sensors and the measurement results are analysed.

During operation of the turbine, in particular when the turbine is operated at full load, the signals of the sensors are monitored to determine the state of the burner 2 in order to detect a flashback in the main flame 16. When a flashback occurs, immediately an injection of water into the mixing volume is triggered to cool the affected burner 2 for about 8 to 12 seconds.

If the flashback state is still given after the first injection of water the main fuel supply 4 and/or the central fuel supply 8 to the main stage of the burner is reduced by about 10% wherein an amount of about 5% of the fuel reduced at the main stage is redirected to the pilot stage 12 of the same burner 2.

In general, the method is based on detection of flashback, injection of water and fuel reduction and redistribution to stabilize the combustion process and load reduction, after which flashback will be eliminated. Emission requirements might not be met during this procedure, but the operation of the gas turbine can be continued instead of launching an engine trip procedure. The temperature measurement is continued during the operation. If the flashback state is over the fuel is directed again to support the main flame 16 and the gas turbine is ramped up again to full load.

## Claims

1. Method to operate a combustion device, in particular of a gas turbine, comprising
- at least one burner, wherein combustion air and fuel are supplied into a mixing volume of the burner, and
- a combustion chamber, wherein the mixed combustion air and fuel is burned inside the combustion chamber, and
- a flashback detection device, which monitors continuously the combustion device in order to detect a potential flashback state, and
- a water supply arrangement, which comprises a storage vessel and is connected to the burner;
wherein in case of a flashback state water is injected into the mixing volume for at least 3 sec and at most 30 sec to reduce the combustion temperature, therefore the storage vessel is filled at least 15% and at most 95% with water and the remaining part with gas having a pressure of at least 10 bar.

2. Method according to claim 1,
wherein the fuel comprises at least for 25%, in particular at least for 40%, a high reactive fuel, in particular hydrogen.

3. Method according to claim 1 or 2,
wherein the storage vessel is filled with water and inert gas, in particular nitrogen.

4. Method according to one of the claims 1 to 3,
wherein the pressure within the storage vessel is kept during operation at least 1,5 bar, in particular at least 2,5 bar, above the pressure within the combustion chamber added the pressure drop from the storage vessel to the mixing volume.

5. Method according to one of the claims 1 to 4,
wherein in case of a flashback state water is injected for at least 8 sec and/or at most 12 sec.

6. Method according to one of the claims 1 to 5,
wherein the water injection is repeated up to a predetermined maximum number of 10 times, in particular of 5 times, if the flashback state is still given.

7. Method according to claim 6,
wherein a reaction time until the next water injection is at least 1 sec, in particular at least 2 sec, and/or at most 5 sec, in particular at most 3 sec.

8. Method according to claim 6 or 7,
wherein the volume of the storage vessel and the share of water and gas is defined in that after the predetermined number of water injections the pressure within the storage vessel is at least 1,5 bar above the pressure within the combustion chamber added the pressure drop from the storage vessel to the mixing volume.

9. Method according to one of the claims 6 to 8,
wherein the fuel supply is stopped if after the predetermined maximum number of water injections the flashback state is still given.

10. Method according to one of the claims 1 to 9,
wherein the mass-flow of the water is at least 0,1 times, in particular at least 0,2-times, and/or at most 0,8 times, in particular at most 0,5 times, the mass-flow of the fuel; and/or
wherein the flow of the water is at least 0,02 l/s, in particular at least 0,04 l/s, per burner and/or at most 0,1 l/s, in particular at most 0,07 l/s, to the respective burner.

11. Method according to one of the claims 1 to 10,
wherein the combustion device comprises a number of burners,
wherein the flashback detection device monitors continuously each of the burners in order to detect a potential flashback state at the respective burner, wherein in case of a flashback state water is injected at least into the mixing volume of the respective burner.

12. Method according to claim 11,
wherein the combustion device comprises a common combustion chamber;
wherein in case of a flashback state water is further injected into the mixing volume of at least two adjacent burners; and/or
wherein in case of a flashback state water is further injected into the mixing volume of each of the burners.

13. Method according to one of the claims 1 to 12,
wherein in case of a flashback state the fuel supply at least to the respective burner, in particular also to both adjacent burners, in particular to all burners, is reduced by at least 5% and at most 50%.

14. Method according to one of the claims 1 to 13,
wherein the burner comprises a main stage with the mixing volume and a pilot stage,
wherein in case of a flashback state the fuel supply to the main stage of the respective burner is redirected partly to the pilot stage by at least 5% and at most 50%.

15. Method according to claim 13 or 14,
wherein a reduction and/or a redirection of the fuel supply is done with each water injection.

16. Method according to one of the claims 13 to 15,
wherein with the reduction of the fuel supply the share of the high reactive fuel is reduced.
